## Europäisches Patentamt
## European Patent Office
## Office européen des brevets

(19)

(11) Numéro de publication: **0 044 584**
**B1**

(12)

# FASCICULE DE BREVET EUROPEEN

(45) Date de publication du fascicule du brevet:
**27.06.84**

(51) Int. Cl.³: **E 04 F 11/18, F 16 B 2/18**

(21) Numéro de dépôt: **81200740.9**

(22) Date de dépôt: **30.06.81**

(54) **Procédé d'assemblage de deux profilés.**

(30) Priorité: **21.07.80 FR 8016083**

(43) Date de publication de la demande:
**27.01.82 Bulletin 82/4**

(45) Mention de la délivrance du brevet:
**27.06.84 Bulletin 84/26**

(84) Etats contractants désignés:
**AT BE CH DE GB IT LI LU NL SE**

(56) Documents cités:
**FR - A - 2 128 366**
**FR - A - 2 268 920**
**GB - A - 484 422**

(73) Titulaire: **TECHNAL INTERNATIONAL S.A., 254 rue Léon Joulin, F-31024 Toulouse Cedex (FR)**

(72) Inventeur: **Laugier, Yves Dominique, 46 rue du Canon d'Arcole, F-31000 Toulouse (FR)**

(74) Mandataire: **Barre, Philippe, Cabinet Barre, Gatti, Laforgue 95, rue des Amidonniers, F-31069 Toulouse Cedex (FR)**

BUNDESDRUCKEREI BERLIN

## Description

L'invention concerne un procédé d'assemblage de deux profilés suivant des directions sécantes, en particulier perpendiculaires. L'invention peut notamment s'appliquer dans le secteur du bâtiment et de la construction pour réaliser l'assemblage de montants et de lisses (hautes ou basses) de garde-corps.

On connaît actuellement des procédés d'assemblage de profilés, notamment dans le secteur du bâtiment ci-dessus indiqué, qui consistend à amener un des profilés à pénétrer dans l'autre et à bloquer les deux profilés au moyen d'une clavette introduite en force dans un ou des trous pratiqués dans l'un des profilés; on pourra se reporter au brevet FR-A-2 128 366 ou brevet FR-A-2 268 920 pour plus de détails sur ce type d'assemblage. Ces assemblages présentent plusieurs avantages, notamment ceux d'une bonne tenue mécanique, d'une grande simplicité des éléments mis en oeuvre puisqu'ils nécessitent la présence d'une simple clavette et du caractère esthétique de leur apparence (la clavette située dans un des profilés pouvant être masquée).

Toutefois, ces assemblages présentent deux inconvénients qui en pratique se sont révélés très gênants. En premier lieu, la mise en place en force de la clavette est une opération difficile et peu pratique qui occasionne des rayures sur les profilés. En outre, une fois réalisé, l'assemblage est extrêmement difficile à démonter et conduit toujours à une certaine détérioration des profilés. Ces défauts n'ont pu être écartés jusqu'à présent sans compliquer notablement la structure de l'assemblage; or, la simplicité de l'assemblage et donc son coût réduit sont des qualités de l'assemblage et donc son coût réduit sont des qualités primordiales pour ce type de dispositif (utilisé en particulier dans le bâtiment où un nombre élevé d'assemblages sont à réaliser de façon répétitive), de sorte que le problème se trouve actuellement mal résolu et ce, depuis déjà plusieurs années.

La présente invention se propose de remédier aux défauts sus-évoqués des assemblages connus et d'indiquer un procédé d'assemblage perfectionné qui associe les avantages des procédés d'assemblage classiques (simplicité et faible coût des organes utilisés, bonne tenue mécanique, caractère esthétique) à une grande facilité de mise en oeuvre et une possibilité de démontage aisé en cas de besoin.

A cet effet, et conformément à l'état de la technique antérieure mentionné ci-dessus le procédé visé pour l'assemblage de deux profilés dont l'un comprend une paroi bordée par deux ailes pourvues de retours est du type dans lequel:

(a) on pratique dans la paroi du premier profilé une fenêtre de section correspondant à celle du second profilé,
(b) on pratique dans le second profilé au moins un trou pour le passage d'une clavette, chaque trou étant positionné à une distance du chant d'extrémité dudit second profilé telle que, une fois le second profilé en place dans la fenêtre du premier avec son chant en appui contre les retours de celui-ci, ledit trou présente une portion apparente débordant par rapport à la paroi du premier profilé,
(c) on introduit le second profilé dans la fenêtre du premier profilé jusqu'à disposer son chant d'extrémité en appui contre les retours du premier profilé,
(d) on introduit chaque clavette dans la portion apparente d'un trou du second profilé.

Le procédé conforme à la présente invention se caractérise en ce que:

— on utilise une ou des clavettes comprenant une tige, de forme adaptée pour pouvoir pivoter sur elle-même autour de son axe longitudinal et présentant une section amincie sur une partie de sa périphérie de façon à posséder, au niveau des diamètres passant par sa partie amincie, une épaisseur moindre par rapport à celle existant au niveau des diamètres passant par une partie non amincie,
— chaque trou est positionné lors de l'opération (a) de façon que sa portion apparente déborde par rapport à la paroi sur une hauteur au moins égale à l'épaisseur de la tige de clavette au niveau de sa partie amincie en vue de permettre l'introduction de celle-ci, et inférieure à l'épaisseur de ladite tige au niveau d'une partie non amincie, en vue d'autoriser un blocage,
— la clavette est introduite dans le trou lors de l'opération (d) de sorte que la partie amincie de sa tige soit située contre la paroi du premier profilé,
— l'on réalise une opération finale consistant à faire pivoter chaque clavette autour de l'axe longitudinal de sa tige en vue d'amener une partie non amincie de celle-ci en pression contre la paroi du premier profilé.

La mise en oeuvre d'un tel procédé est d'exécution facile et ne comporte aucune opération délicate. L'introduction de chaque clavette s'effectue par simple glissement, dans la portion apparente du trou correspondant, sans risque de rayure des profilés. Le pivotement de la clavette assure ensuite un blocage des deux profilés, qui permet à l'assemblage de bénéficier d'une excellente tenue mécanique.

Afin de faciliter le pivotement des clavettes, chacune de celles-ci possède une tige, de préférence pourvue d'un prolongement non aligné avec cette dernière, faisant par exemple un angle droit avec celle-ci; le pivotement est très aisément assuré en manoeuvrant ledit prolongement pour l'amener en appui ou à proximité de la paroi du premier profilé.

En cas de besoin, le démontage est possible en exécutant la manoeuvre inverse qui libère la clavette et permet de la sortie du trou par simple traction sans risque de détérioration des profilés.

Selon un mode de mise en oeuvre avantageux, on peut utiliser une clavette ayant une tige cylindrique de diamètre —d—, tronquée par un méplat sur une épaisseur e pour réaliser sa partie amincie; on positionne alors chaque trou pratiqué dans le second profilé de sorte que le bord de celui-ci soit situé à une distance H du chant d'extrémité, telle que D — d < H ≤ D — d + e, où D est la distance séparant les retours et la paroi du premier profilé. Comme on le comprendra mieux plus loin, cette condition garantit à la fois l'introduction facile de la clavette en l'orientant de sorte que son méplat glisse contre la paroi du premier profilé, et l'obtention d'un blocage lorsque l'on tourne ladite clavette pour amener sa partie cylindrique non amincie en pression contre cette paroi du premier profilé.

Selon les applications, l'assemblage peut être réalisé avec une, deux ou un nombre plus important de clavettes. Dans le cas d'une clavette unique, le trou pour la mise en place de celle-ci est de préférence pratiqué à peu près dans le plan médian du second profilé, de sorte que le blocage soit assuré à peu près symétriquement par rapport aux profilés.

Dans de nombreuses applications, il est intéressant de prévoir deux clavettes qui assurent une résistance mécanique élevée de l'assemblage; on réalise alors deux trous dans le second profilé, l'un d'un côté du plan médian de celui-ci, l'autre de l'autre côté.

L'invention s'applique notamment dans le domaine du bâtiment, le premier profilé étant en particulier constitué par une lisse de grandecorps et le second profilé par un montant de garde-corps; les profilés peuvent être en alliage léger ou autre matériau.

D'autres caractéristiques, buts et avantages de l'invention se dégageront de la description qui suit en référence aux dessins annexés, lesquels en présentent à titre d'exemples un mode de réalisation et une variante dans le domaine d'application ci-dessus évoqué; sur ces dessins qui font partie intégrante de la description:

—  la fig. 1 représente en perspective les éléments d'un assemblage, prêts à être montés,
—  la fig. 2 est une vue schématique à échelle dilatée avec coupe frontale selon A, d'une clavette conforme à l'invention,
—  la fig. 3 est une vue de profil de cette clavette,
—  les fig. 4, 5, 6, 7 et 8 illustrent le procédé d'assemblage,
—  la fig. 9 présente en perspective l'assemblage réalisé,
—  les fig. 10 et 11 illustrent une variante du procédé d'assemblage.

Les profilés à assembler, représentés à titre d'exemple aux figures, sont en alliage léger d'aluminium et sont constitués par une lisse haute 1 de garde-corps (premier profilé) et par un montant 2 de garde-corps (second profilé).

La lisse 1 est formée par une paroi 1a, deux ailes latérales 1b, 1c et deux courts retours 1d et le revenant vers l'intérieur du profilé parallèlement à la paroi 1a. Sur cette lisse peut être encliquetée de façon classique, après assemblage, une main courante qui l'obture supérieurement.

Chaque montant 2, appelé à être assemblé avec cette lisse, présente en l'exemple une section à la forme d'un double Y, de largeur légèrement inférieure à celle de la paroi 1a de la lisse.

L'assemblage est réalisé au moyen de deux clavettes telles que 3, comportant chacune une tige 3a et un prolongement 3b, en l'exemple orienté à 90° par rapport à cette tige. La tige 3a possède une section cylindrique avec un méplat 3c qui la tronque sur une épaisseur e, sur une partie de sa périphérie, de façon à former une partie amincie.

En l'exemple, le prolongement 3b est approximativement situé dans le plan de symétrie P du méplat 3c (plan de symétrie de la partie amincie de la tige). En outre, ce prolongement 3b présente une longueur notablement plus faible que la largeur de la paroi 1a de la lisse pour pouvoir être rabattu contre celle-ci comme on le verra plus loin.

Le méplat 3c est sensiblement plan et s'étend sur toute la longueur de la tige, de façon à soustendre un angle au sommet $\alpha$ de l'ordre de 60°. En pratique, cet angle qui dépendra de l'application et de la nature des matériaux de l'assemblage, pourra être choisi dans une plage allant de 30° à 90°.

La tige 3a de clavette peut par exemple présenter un diamètre —d— de l'ordre de 3 mm, et être tronquée sur une épaisseur e sensiblement comprise entre 3/10e mm et 8/10e mm. (Cette valeur représente donc la différence d'épaisseur entre la partie amincie et la partie non amincie de la tige.)

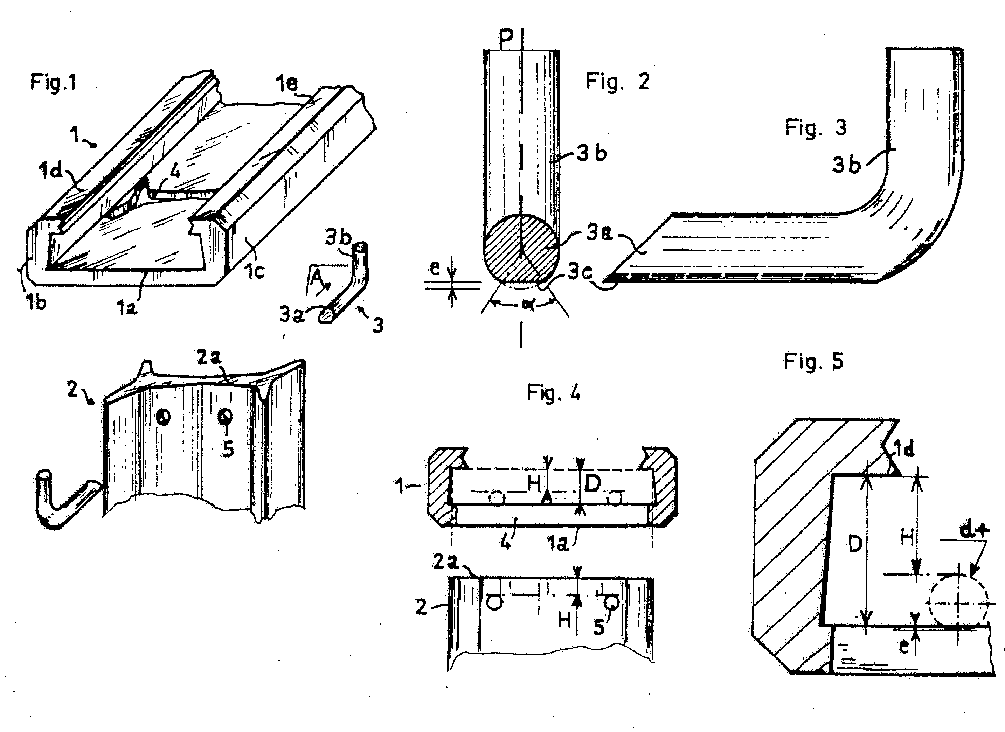

En outre, l'extrémité de la tige 3a peut être biaise comme le représente la fig. 3, en vue de faciliter son introduction dans un des trous du montant 2.

La première étape du procédé consiste à pratiquer de façon connue en soi pour ce type d'assemblage, une fenêtre 4 dans la paroi 1a de la lisse 1, cette fenêtre ayant une forme correspondant à la section du montant 2 pour permettre d'y engager celui-ci à frottement doux.

Deux trous cylindriques tels que 5 sont ensuite pratiqués dans le montant 2. Chaque trou présente un diamètre d+ égal au jeu près à celui des tiges 3a de clavettes.

Ces trous sont positionnés par rapport au chant d'extrémité 2a du montant de sorte que la distance H de leur bord par rapport à ce chant (fig. 4 et 5) satisfasse à la condition: D — d < H ≤ D — d + e, où D est la distance qui sépare les retours 1d, 1e et la paroi 1a de la lisse.

De préférence, on choisira pour H une valeur égale à D − d + e ou proche de cette valeur qui correspond au blocage le plus efficace avec une clavette donnée. Dans chaque application, ces trous ainsi positionnés peuvent être très rapidement réalisés à l'aide d'un gabarit.

Une fois les trous 5 réalisés, on introduit le montant 2 dans la fenêtre 4 de la lisse 1 jusqu'à ce que le chant 2a dudit montant vienne en appui contre les retours 1d et 1e de la lisse.

Dans cette position, compte-tenu du positionnement sus-évoqué des trous 5, ceux-ci ont une portion située au niveau de la paroi 1a de la lisse et une portion apparente débordant par rapport à cette paroi; cette portion apparente présente une hauteur égale ou légèrement supérieure à l'épaisseur (d − e) de la tige de clavette au niveau de son méplat 3c.

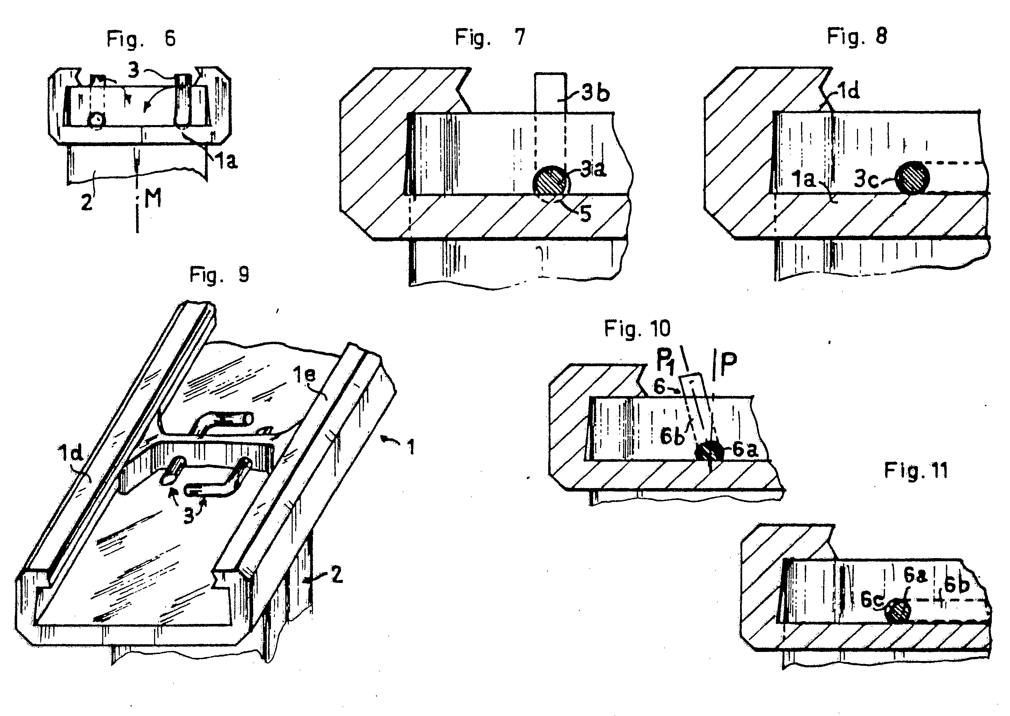

Ceci permet d'introduire par un simple glissement les tiges de clavette dans chacun des deux trous 5 en disposant le méplat 3c de celles-ci contre la paroi 1a de la lisse, comme l'illustrent les fig. 6 et 7.

De préférence, une des clavettes est introduite à partir d'une face du montant et l'autre à partir de l'autre face, afin que leur prolongement 3b ne se gêne pas lors de leur rabattement.

Chaque clavette 3 est ensuite amenée à pivoter sur environ 90° vers le plan médian M du montant en manoeuvrant son prolongement 3b pour l'amener en appui ou à proximité de la paroi 1a de la lisse. Cette manoeuvre peut être exécutée très rapidement par un simple coup de marteau.

L'assemblage est alors terminé. Au cours de la rotation de la clavette, le méplat 3c a cédé sa place à une partie cylindrique non amincie de la tige 3a de clavette 3 et le montant 2 s'est trouvé bloqué et verrouillé entre lesdites clavettes et les deux retours 1d et 1e de la lisse.

Notons qu'en l'exemple, les ailes 1b et 1c de la lisse sont légèrement inclinées vers l'intérieur, leur agencement permettant un blocage complémentaire du montant par appui en partie haute sur lesdites ailes au voisinage de leur jonction avec les retours. Ce blocage complémentaire n'est pas obligatoire mais peut être recommandé si des efforts latéraux importants son susceptibles de s'exercer sur un des profilés; il peut être obtenu par tout autre moyen, par exemple par la présence de courtes nervures prévues sur les retours de lisse, au droit des faces latérales de montant.

Le démontage de l'assemblage se réalise tout aussi facilement que le montage; il suffit de faire pivoter les clavettes 3 en sens inverse (notamment au moyen d'un outil à bord mince) et de les retirer.

Les fig. 10 et 11 illustrent une variante du procédé, qui peut être préférée dans le cas d'assemblage soumis à des vibrations.

Dans cette variante, on utilise des clavettes 6 dont le prolongement 6b se trouve dans un plan $P_1$ angulairement décalé par rapport au plan de symétrie P du méplat 6c de la tige de clavette (formant la partie amincie de celle-ci).

Le procédé d'assemblage est similaire à celui précédemment décrit mais chaque clavette 6 est amenée à pivoter sur un angle supérieur à 90°; le verrouillage de l'assemblage en est ainsi sensiblement amélioré.

Notons que, dans cette variante, le fait de disposer les deux clavettes de chaque côté du montant permet de prévoir un type unique de clavette.

De façon générale, l'invention s'étend à toute section de tige de clavette comportant, sur un secteur, une partie amincie et, sur un secteur voisin, une partie non amincie.

De même, les termes »ailes«, »retours« utilisés pour définir la structure du premier profilé doivent être pris dans le sens le plus large, les retours pouvant le cas échéant se rejoindre pour former une face continue.

## Revendications

1. Procédé d'assemblage de deux profilés suivant des directions sécantes, en particulier sensiblement perpendiculaires, le premier profilé (1) comprenant une paroi (1a) bordée par deux ailes (1b, 1c) pourvues de retours (1d, 1e), ledit procédé d'assemblage étant du type dans lequel:

(a) on pratique dans la paroi (1a) du premier profilé (1) une fenêtre (4) de section correspondant à celle du second profilé (2),

(b) on pratique dans le second profilé (2) au moins un trou (5) pour le passage d'une clavette (3), chaque trou (5) étant positionné à une distance du chant d'extrémité (2a) dudit second profilé telle que, une fois le second profilé en place dans la fenêtre (4) du premier avec son chant (2a) en appui contre les retours (1d, 1e) de celui-ci, ledit trou (5) présente une portion apparente débordant par rapport à la paroi (1a) du premier profilé (1),

(c) on introduit le second profilé (2) dans la fenêtre (4) du premier profilé (1) jusqu'à disposer son chant d'extrémité (2a) en appui contre les retours (1d, 1e) du premier profilé (1),

(d) on introduit chaque clavette (3) dans la portion apparente d'un trou (5) du second profilé (2), ledit procédé étant caractérisé en ce que:

— on utilise une ou des clavettes (3) comprenant une tige (3a), de forme adaptée pour pouvoir pivoter sur elle-même autour de son axe longitudinal et présentant une section amincie sur une partie de sa périphérie de façon à posséder, au niveau des diamètres passant par sa partie amincie, une épaisseur moindre par rapport à celle existant au niveau des diamètres passant par une partie non amincie,

— chaque trou (5) est positionné lors de l'opération (a) de façon que sa portion apparente déborde par rapport à la paroi (1a) sur une hauteur au moins égale à l'épaisseur de la tige (3a) de clavette au niveau de sa partie amincie en vue de permettre l'introduction de celle-ci, et inférieure à l'épaisseur de ladite tige (3a) au niveau d'une partie non amincie, en vue d'autoriser un blocage,

— la clavette (3) est introduite dans le trou (5) lors de l'opération (d) de sorte que la partie amincie de sa tige (3a) soit située contre la paroi (1a) du premier profilé (1),

— l'on réalise une opération finale consistant à faire pivoter chaque clavette (3) autour de l'axe longitudinal de sa tige (3a) en vue d'amener une partie non amincie de celle-ci en pression contre la paroi (1a) du premier profilé (1).

2. Procédé selon la revendication 1, caractérisé en ce que l'on utilise une clavette (3) ayant une tige cylindrique (3a) de diamètre d, tronquée par un méplat (3c) sur une épaisseur —e— pour réaliser sa partie amincie, et en ce que l'on positionne chaque trou (5) pratiqué dans le second profilé (2) de sorte que le bord de ce trou soit situé à une distance H du chant d'extrémité (2a), telle que $D - d < H \le D - d + e$, où D est la distance séparant la paroi (1a) et les retours (1d, 1e) du premier profilé (1).

3. Procédé selon la revendication 2, dans lequel on pratique dans le second profilé (2) un ou des trous (5), de diamètre sensiblement égal, au jeu près, à celui de la ou des tiges (3a) de clavette, caractérisé en ce que l'on positionne ce ou ces trous (5) de sorte que la distance H soit égale à $D - d + e$ ou proche de cette valeur.

4. Procédé selon l'une des revendications 1, 2 ou 3, caractérisé en ce que l'on utilise une ou des clavettes (3) ayant une tige (3a) pourvue d'un prolongement (3b) non aligné avec celle-ci et en ce que le pivotement de chaque clavette (3) est assuré en manoeuvrant ledit prolongement (3b) pour l'amener en appui ou à proximité de la paroi (1a) du premier profilé (1).

5. Procédé selon la revendication 4, caractérisé en ce que l'on utilise une ou des clavettes (3) dont le prolongement (3b) se trouve approximativement situé dans le plan de symétrie P de la partie amincie de la tige (3a), chaque clavette étant amenée à pivoter sur un angle de l'ordre de 90°.

6. Procédé selon la revendication 4, caractérisé en ce que l'on utilise une ou des clavettes (6) dont le prolongement (6b) se trouve dans un plan $P_1$ angulairement décalé par rapport au plan de symétrie P de la partie amincie de la tige (6a), chaque clavette (6) étant amenée à pivoter sur un angle supérieur à 90°.

7. Procédé selon l'une des revendications 1, 2, 3, 4, 5 ou 6, caractérisé en ce que l'on utilise deux clavettes indépendantes (3) et en ce que l'on réalise, pour la mise en place de celles-ci, deux trous (5) situés de part et d'autre du plan médian M du second profilé (2).

8. Procédé selon la revendication 7, caractérisé en ce que les deux clavettes (3) sont introduites dans les trous (5) du second profilé (2), l'une à partir d'une face de celui-ci, l'autre à partir de l'autre face, lesdites clavettes (3) étant ensuite amenées à pivoter vers le plan médian M du second profilé (2).

9. Procédé selon l'une des revendications 1, 2, 3, 4, 5, 6, 7 ou 8, caractérisé en ce que l'on utilise une clavette dont la tige (3a) est sensiblement cylindrique, la section amincie de celle-ci étant formée par un méplat (3c) sous-tendant un angle au sommet $\alpha$ compris entre 30° et 90°.

## Patentansprüche

1. Verfahren zum Verbinden zweier Profile entlang Schneidelinien, insbesondere ungefähr senkrechten solchen, von denen das erste Profil (1) eine Wandung (1a) umfaßt, welche von zwei mit Rückläufen (1d, 1e) versehenen Flügeln (1b, 1c) eingefaßt ist, wobei das besagte Verbindungsverfahren derart ist, daß man

(a) in die Wandung (1a) des ersten Profils (1) ein Fenster (4) einarbeitet, dessen Querschnitt dem des zweiten Profils (2) entspricht;

(b) in das zweite Profil (2) mindestens ein Loch (5) zum Durchgang eines Dübels (3) einarbeitet, wobei die Löcher (5) jeweils auf einen solchen Abstand von der Endkante (2a) des besagten zweiten Profils plaziert sind, daß, sobald sich das zweite Profil im Fenster (4) des ersten befindet, während sich seine Kante (2a) an den Rückläufen (1d, 1e) desselben abstützt, das besagte Loch (5) einen sichtbaren, gegenüber der Wandung (1a) des ersten Profils (1) vorstehenden Teil aufweist;

(c) das zweite Profil (2) in das Fenster (4) des ersten Profils (1) einführt, bis seine Endkante (2a) in eine Lage gebracht wird, in der sie sich an den Rückläufen (1d, 1e) des ersten Profils (1) abstützt; und

(d) die Dübel (3) jeweils in den sichtbaren Teil eines Lochs (5) des zweiten Profils (2) einführt; wobei das besagte Verfahren dadurch gekennzeichnet ist, daß

— man einen oder mehrere Dübel (3), umfassend einen Stab (3a) mit einer zum Drehen auf sich selbst um seine Längsachse geeigneten Form und mit einem verjüngten Abschnitt über einen Teil seines Umfangs verwendet, so daß er auf der Höhe der durch seinen verjüngten Teil durchgehenden Durchmesser eine geringere Dicke im Vergleich zu der auf der Höhe der durch einen nichtverjüngten Teil durchgehenden Durchmesser aufweist;

— die Löcher (5) im Arbeitsgang (a) jeweils derart plaziert werden, daß ihr sichtbarer Teil gegenüber der Wandung (1a) auf eine Höhe hinausragt, welche mindestens der Dicke des Dübelstabs (3a) auf der Höhe seines verjüngten Teils gleich ist, um die Einführung desselben zu ermöglichen, und geringer als die Dicke des besagten Stabs (3a) auf der Höhe eines nichtverjüngten Teils, um eine Sperre zu ermöglichen;

— der Dübel (3) im Arbeitsgang (d) in das Loch (5) so eingeführt wird, daß der verjüngte Teil seines Stabs (3a) gegen die Wandung (1a) des ersten Profils (1) anliegt; und

— ein letzter Arbeitsgang durchgeführt wird, welcher darin besteht, daß man die Dübel (3) sich jeweils um die Längsachse ihres Stabs (3a) drehen läßt, um einen nichtverjüngten Teil desselben unter Druck gegen die Wandung (1a) des ersten Profils (1) zu bringen.

2. Verfahren nach Anspruch 1, dadurch gekennzeichnet, daß man einen Dübel (3) mit einem zylinderförmigen Stab (3a) mit einem Durchmesser d verwendet, welcher durch einen flachen Teil (3c) über eine Dicke e abgestumpft ist, um seinen verjüngten Teil zu bilden, und daß man die in das zweite Profil (2) eingearbeiteten Löcher (5) jeweils so plaziert, daß die Kante des jeweiligen Lochs auf einem solchen Abstand H von der Endkante (2a) liegt, daß $D - d < H \leq D - d + e$ ist, wobei D den Abstand zwischen der Wandung (1a) und den Rückläufen (1d, 1e) des ersten Profils (1) darstellt.

3. Verfahren nach Anspruch 2, bei welchem man in das zweite Profil (2) ein oder mehrere Löcher (5) einarbeitet, deren Durchmesser, abgesehen vom Spielraum, dem des Dübelstabs oder der Dübelstäbe (3a) ungefähr gleich ist, dadurch gekennzeichnet, daß man dieses Loch oder diese Löcher (5) derart plaziert, daß der Abstand H gleich $D - d + e$ ist oder annähernd diesen Wert hat.

4. Verfahren nach einem der Ansprüche 1, 2 oder 3, dadurch gekennzeichnet, daß man einen oder mehrere Dübel (3) verwendet, welche einen Stab (3a) mit einer mit letzterem nicht ausgerichteten Verlängerung (3b) besitzen, und daß die Umdrehung des jeweiligen Dübels (3) dadurch zuwege gebracht wird, daß die besagte Verlängerung (3b) gerückt wird, um sie an die Wandung (1a) des ersten Profils (1) anliegen zu lassen oder sie in die Nähe dieser Wandung zu bringen.

5. Verfahren nach Anspruch 4, dadurch gekennzeichnet, daß man einen oder mehrere Dübel (3) verwendet, deren Verlängerung (3b) ungefähr in der Symmetrieebene P des verjüngten Teils des Stabs (3a) liegt, wobei man die Dübel sich jeweils um einen Winkel von der Größenordnung von 90° drehen läßt.

6. Verfahren nach Anspruch 4, dadurch gekennzeichnet, daß man einen oder mehrere Dübel (6) verwendet, deren Verlängerung (6b) in einer gegenüber der Symmetrieebene P des verjüngten Teils des Stabs (6a) winkelverschobenen Ebene $P_1$ liegt, wobei man die Dübel (6) sich jeweils um einen über 90° liegenden Winkel drehen läßt.

7. Verfahren nach einem der Ansprüche 1, 2, 3, 4, 5 oder 6, dadurch gekennzeichnet, daß man zwei unabhängige Dübel (3) verwendet und zum Einsetzen derselben zwei zu beiden Seiten der Medianebene M des zweiten Profils (2) liegende Löcher (5) einarbeitet.

8. Verfahren nach Anspruch 7, dadurch gekennzeichnet, daß die beiden Dübel (3) in die Löcher (5) des zweiten Profils (2) eingeführt werden, einer von einer Fläche desselben aus, der andere von der anderen Fläche aus, wobei man dann diese Dübel (3) sich gegen die Medianebene M des zweiten Profils (2) drehen läßt.

9. Verfahren nach einem der Ansprüche 1, 2, 3, 4, 5, 6, 7 oder 8, dadurch gekennzeichnet, daß man einen Dübel verwendet, dessen Stab (3a) ungefähr zylinderförmig ist, wobei der verjüngte Abschnitt desselben durch einen flachen Teil (3c) gebildet wird, welcher an der Spitze einen zwischen 30° und 90° liegenden Winkel $\alpha$ einnimmt.

## Claims

1. Method of assembling two sections along cutting lines, particularly approximately perpendicular ones, the first section (1) comprising a wall (1a), which is bordered by two wings (1b, 1c), provided with return traverses (1d, 1e), said assembling method being of the type in which

(a) the wall (1a) of the first section (1) is given a window (4), having a cross-section corresponding to that of the second section (2);

(b) the second section (2) is given at least one hole (5) for the passage of a key (3), each hole (5) being placed at such a distance from the terminal edge (2a) of said second section that, once the second section is set in the window (4) of the first, with its edge (2a) leaning against the return traverses (1d, 1e) of the latter, said hole (5) contains a visible portion projecting relative to the wall (1a) of the first section (1);

(c) the second section (2) is introduced into the window (4) of the first section (1) until its terminal edge (2a) comes to lean against the return traverses (1d, 1e) of the first section (1); and

(d) each key (3) is introduced into the visible portion of a hole (5) of the second section (2); said method being characterized in that

— one or more keys (3) are used, comprising a rod (3a), having a shape suitable for pivoting on itself about its longitudinal axis and possessing a reduced cross-section over part of its circumference, so that it has, at the level of the diameters passing through its reduced part, a lower thickness relative to that prevailing at the level of the diameters passing through a non-reduced part;
- each hole (5) is places in the operation (a) so that its visible portion projects, relative to the wall (1a), to a height at least equal to the thickness of the key-rod (3a) at the level of its reduced part, so as to enable the latter to be introduced, and less than the thickness of said rod (3a) at the level of a non-reduced part, so as to make a blocking action possible;
- the key (3) is introduced in the operation (d) into the hole (5) so that the reduced part of its rod (3a) is situated against the wall (1a) of the first section (1); and
- a final operation is carried out, consisting in letting each key (3) pivot about the longitudinal axis of its rod (3a), so as to bring a non-reduced part of the latter under pressure against the wall (1a) of the first section (1).

2. Method according to claim 1, characterized in that a key (3) is used, having a cylindrical rod (3a) of diameter d and truncated by a flat part (3c) across a thickness e, so as to form its reduced part, and that each hole (5), made in the second section (2), is placed so that the edge of that hole is situated at a distance H from the terminal edge (2a) such that $d - d$ is less than H which is equal to, or less than, $D - d + e$, where D is the distance between the wall (1a) and the return traverses (1d, 1e) of the first section (1).

3. Method according to claim 2, in which the second section (2) is provided with one or more holes (5), having a diameter approximately equal, apart from the clearance, to that of the rod or rods (3a) of the key, characterized in that this hole (5) is placed, or these holes (5) are placed, in such a way that the distance H is equal to $D - d + e$ or close to that value.

4. Method according to one of the claims 1, 2 or 3, characterized in that one or more keys (3) are used, having a rod (3a) provided with an extension (3b) that is not aligned with the rod, and that the pivoting of each key (3) is brought about by manipulating said extension (3b), so as to bring it to rest against, or close to, the wall (1a) of the first section (1).

5. Method according to claim 4, characterized in that one or more keys (3) are used, the extension (3b) of which is situated approximately in the plane of symmetry P of the reduced part of the rod (3a), each key being made to pivot about an angle of the order of 90°.

6. Method according to claim 4, characterized in that one or more keys (6) are used, the extension (6b) of which lies in a plane $P_1$, angularly offset relative to the plane of symmetry P of the reduced part of the rod (6a), each key (6) being made to pivot about an angle greater than 90°.

7. Method according to one of the claims 1, 2, 3, 4, 5 or 6, characterized in that two independent keys (3) are used and that two holes (5), situated on either side of the median plane M of the second section (2), are made for inserting these keys.

8. Method according to claim 7, characterised in that the two keys (3) are introduced into the holes (5) of the second section (2), one from one surface of the latter, the other from the other surface, said keys (3) being then made to pivot towards the median plane M of the second section (2).

9. Method according to one of the claims 1, 2, 3, 4, 5, 6, 7 or 8, characterized in that a key is used, the rod (3a) of which is approximately cylindrical, the reduced cross-section of the latter being formed by a flat part (3c), subtending an apex angle $\alpha$ of between 30° and 90°.

Fig.1

Fig. 2

Fig. 3

Fig. 4

Fig. 5

Fig. 6

Fig. 7

Fig. 8

Fig. 9

Fig. 10

Fig. 11